# EUROPÄISCHE PATENTSCHRIFT

(11) **EP 3 995 808 B1**
(45) Veröffentlichungstag und Bekanntmachung des Hinweises auf die Patenterteilung: **04.01.2023**
(21) Anmeldenummer: 20206421.8
(22) Anmeldetag: 09.11.2020
(51) Int. Cl.: G01N 15/02, G01N 15/14, G01N 21/95, G01N 23/2273, G01N 23/2252

(54) **VERFAHREN ZUM KLASSIFIZIEREN VON UNBEKANNTEN PARTIKELN AUF EINER OBERFLÄCHE EINER HALBLEITERSCHEIBE**
METHOD FOR CLASSIFYING UNKNOWN PARTICLES ON A SURFACE OF A SEMICONDUCTOR WAFER
PROCÉDÉ DE CLASSEMENT DES PARTICULES INCONNUES SUR UNE SURFACE D'UN DISQUE SEMI-CONDUCTEUR

(43) Veröffentlichungstag der Anmeldung: 11.05.2022
(73) Patentinhaber: Siltronic AG, 81677 München (DE)
(72) Erfinder: Andres, Sebastian, 84533 Marktl (DE); Hinterleuthner, Robert, 84489 Burghausen (DE); Rupp, Rudolf, 84387 Oberjulbach (DE)
(74) Vertreter: Killinger, Andreas

(56) Entgegenhaltungen:
- US-A1- 2013 279 794
- US-A1- 2016 116 425
- US-A1- 2018 217 065

## Beschreibung

Die vorliegende Erfindung bezieht sich auf ein Verfahren zur Klassifizierung von kleinen Fremdpartikeln auf Halbleiterscheiben.

Monokristalline Halbleiterscheiben (auch Wafer genannt) sind die Grundlage der modernen Elektronik. Während der Herstellung von Bauelementen auf besagten Halbleiterscheiben werden thermische Prozesse und mittlerweile recht komplexe Beschichtungsschritte durchgeführt.

Halbleiterscheiben, insbesondere Halbleiterscheiben aus Silizium, werden üblicherweise hergestellt, indem zuerst ein monokristalliner Stab mit Hilfe des sogenannten Float-Zone Verfahrens (FZ) oder des Czochralski Verfahrens (CZ) gezogen wird. Die so produzierten Stäbe werden mittels dafür geeigneter Sägen wie Drahtsägen, Innenlochsägen oder Bandsägen in Kristallstücke geteilt, welche dann üblicherweise in einer Drahtsäge oder Innenlochsäge zu Halbleiterscheiben verarbeitet werden.

Nach weiteren mechanischen, chemo-mechanischen und/oder chemischen Schritten kann optional eine Epischicht mittels CVD aufgebracht werden.

Diese so hergestellten Halbleiterscheiben werden dann dem weiteren Bauelementprozess zur Verfügung gestellt.

Partikel sind bei der Wafer-Herstellung wegen schrumpfender Designrules im Bauelementprozess ein wichtiges negatives Qualitätsmerkmal und relevant für Prozess- und Reinigungsentwicklungen. Die Form, Position und chemische Zusammensetzung geben dabei meist einen Hinweis auf den Ursprung der kontaminierenden Partikel und damit das Potential in verbesserten Prozessen ihr Auftreten zu reduzieren.

Üblicherweise werden Partikel, die eine ungewollte Kontamination von Halbleiterscheiben darstellen, mittels eines SEM (Scanning Electron Microscop) bildlich dargestellt. Die Kombination aus SEM und EDX (Energy dispersive X-Ray, energiedispersiven Röntgenspektroskopie) stellt dabei eine Methode zur Verfügung, bei der gleichzeitig der Ort, die Größe und Form, aber auch die chemische Zusammensetzung der Partikel ermittelt werden kann.

Diese Art von Analyse ist für Partikel mit einer Ausdehnung von mehr als 200 nm sehr gut geeignet ist.

Partikel mit geringerer Ausdehnung lassen sich nur sehr schwer klassifizieren, da die Information über die Struktur der Partikel fehlt oder mit großem Fehler behaftet ist.

Die Klassifizierung von Partikeln wird umso anspruchsvoller je näher die Partikelgröße sich der SEM-Auflösungsgrenze nähert. Die Auflösungsgrenze der EDX-Analyse ist technisch bedingt im Vergleich zur SEM-Auflösung geringer anzusetzen.

Durch die ständige Miniaturisierung im Bauelementprozess rücken aber vermehrt kleinere Partikel in den Fokus, da sie vermehrt Probleme in der Produktion von Halbleiterbauelementen hervorrufen. Die Vermeidung dieser Partikel in den Herstellprozessen wird daher immens wichtig.

Derzeit liegt der besonders interessante Größenbereich der Partikeldurchmesser im Bereich zwischen etwa 15nm und 200 nm.

Partikel dieser Größe sind mit dem im Stand der Technik vorhandenen Methoden nicht mehr klassifizierbar.

### Stand der Technik / Problembeschreibung

In der Patentschrift JP 2006 303 134 A2 wird eine Auswertemethode beschrieben, bei der Fremdstoffe auf der Oberfläche des Halbleiterwafers sichtbar gemacht, indem schwache Säure in ihrer Dampfphase auf die Oberfläche des Halbleiterwafers gegeben werden, und anschließend die so dekorierten Fremdstoffe mittels eines Partikelzählers detektiert.

Der Nachteil des in der Patentschrift offenbarten Verfahrens ist, dass zwar kleine Partikel "sichtbar", also detektierbar oder zählbar gemacht werden können, es aber keine Informationen bezüglich des Ursprungs des Partikels herausgearbeitet werden können.

Die Patentanmeldung US 2005 062 959 AA beschreibt ein Verfahren, bei dem die kleinen Partikel, die analysiert werden sollen, als Polymerisationskeim für ein Monomer dienen und im Anschluss werden die durch Polymerisation vergrößerten Partikel mittels eines Partikelzählers analysiert.

Auch dieses Patent beschäftigt sich mit der Detektion von Partikel, Informationen über die Struktur des Partikels bleiben bei diesem Verfahren verborgen. Zudem handelt es sich um ein indirektes Verfahren, bei dem nur der Ort des Partikels vermessen werden kann.

Die Patentschrift US 5 715 052 A beschreibt ein Verfahren, bei dem ein Teilbereich eines kleinen Partikels, mehrmals mittels unterschiedlicher optischer Bedingungen unter Zuhilfenahme von zusätzlichem Licht ausgewertet wurden.

Andere Verfahren sind aus US 2016 116 425, US 2013 279 794 und US 2018 217 065 bekannt.

Mit Hilfe dieser Patenschrift ist es zwar prinzipiell möglich, Partikel über ihre innere Struktur zu klassifizieren. Das beschriebene Verfahren scheitert aber, sobald die zu untersuchenden Partikel kleiner als die Auflösung des verwendeten Mikroskops sind. Bei den zu untersuchenden sehr kleinen Partikeln scheitert selbst die Verwendung eines SEM (**S**canning **E**lectron **M**icroscope), um die Aufgabe zu lösen, da keine innere Struktur der Partikel mehr auflösbar ist.

Somit ist die Klassifizierung überwiegend nur noch anhand des Spektrums einer energiedispersiven Röntgenspektroskopie (EDX) möglich.

Das Problem dabei ist, dass je kleiner die zu untersuchenden Partikel sind umso kleiner auch das auswertbare EDX-Messsignal ist. Die Umgebungsbedingungen (zum Beispiel der zunehmende Einfluss der Signalanteile von der Substratoberfläche bzw. - volumen) haben einen zunehmend signifikanten Einfluss auf das Messergebnis und erschweren somit die korrekte Klassifizierung.

Beispielsweise ist bei kleineren Si- oder SiO₂ Partikeln eine direkte Klassifizierung mittels EDX-Spektrums nicht möglich, da in diesem Fall das native Oxid der Partikel und das native Oxid der Umgebung das Messignal signifikant beeinflusst.

Ein weiterer signifikanter Einfluss ist der hohe Signalanteil aus dem Substratvolumen (Wechselwirkungsvolumen), der den geringen Anteil aus dem Partikelvolumen wegen des ungünstigen Verhältnisses von effektivem Partikel- zu Substratvolumen unterdrückt

Aufgabe dieser Erfindung ist es daher, Methoden zur Verfügung zu stellen, die den Nachteil, der im Stand der Technik vorhandenen Methoden, nicht hat.

Gelöst wird die Aufgabe durch die in den Ansprüchen beschriebenen Verfahren.

Die bezüglich der vorstehend aufgeführten Ausführungsformen des erfindungsgemäßen Verfahrens angegebenen Merkmale können entsprechend auf die erfindungsgemäßen Produkte übertragen werden. Umgekehrt können die bezüglich der vorstehend ausgeführten Ausführungsformen der erfindungsgemäßen Produkte angegebenen Merkmale entsprechend auf das erfindungsgemäße Verfahren übertragen werden. Diese und andere Merkmale der erfindungsgemäßen Ausführungsformen werden in der Figurenbeschreibung und in den Ansprüchen erläutert. Die einzelnen Merkmale können entweder separat oder in Kombination als Ausführungsformen der Erfindung verwirklicht werden. Weiterhin können sie vorteilhafte Ausführungen beschreiben, die selbstständig schutzfähig sind.

### Kurzbeschreibung der Abbildungen

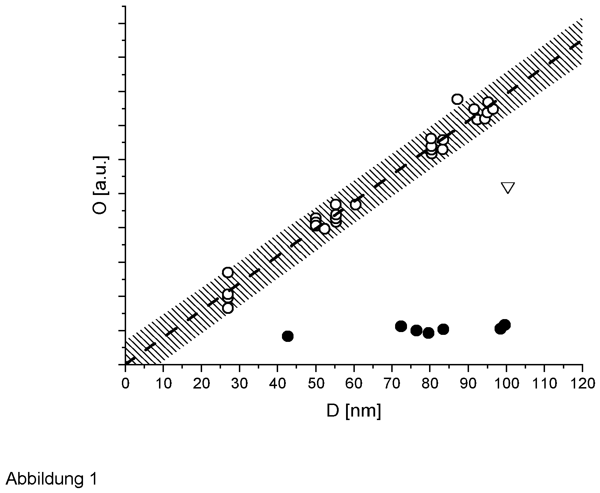

In **Abbildung 1** wird ein aus einem Spektrum einer energiedispersiven Röntgenspektroskopie gewonnene Sauerstoffmesswert (EDX Photonen Anzahl in auf 1 normierter Einheit) in Abhängigkeit des gemessenen Durchmessers von kugelförmiger Partikel gezeigt, die sich auf einem Substrat (in diesem speziellen Fall ein Halbleiterwafer aus Silicium) befinden.

Die Datenpunkte, die durch leere Kreise dargestellt sind, sind Werte, die von bewusst aufgebrachten SiO₂ Partikel stammen. Der schraffierte Bereich gibt den Konfidenzbereich wieder, in dem SiO₂ Partikel mit 95%-er Wahrscheinlichkeit liegen sollten unter der Annahme, dass der Sauerstoffgehalt für diese Partikel linear vom Durchmesser abhängt.

Bei den gefüllten Kreisen handelt es sich um Partikel, die keinen nennenswerte Abhängigkeit des Sauerstoffgehalts vom Durchmesser des Partikels zeigen. Der Bereich, in dem diese Partikel in der Abbildung liegen, unterscheiden sich signifikant vom vorher genannten Konfidenzbereich.

Der Datenpunkt, der durch ein leeres Dreieck dargestellt ist, stammt von einem Partikel der offenbar eine gewisse Abhängigkeit des Sauerstoffgehaltes von seinem Durchmesser zeigt, dennoch ist der Datenpunkt außerhalb des vorher definierten Konfidenzbereich für SiO₂ Partikel.

### Detaillierte Beschreibung und erfindungsgemäße Ausführungsbeispiele

Erfindungsgemäß werden Partikel bekannter chemischer Zusammensetzung und unterschiedlicher Größe auf eine Oberfläche eines Substrates (Testscheibe) aufgebracht. Bevorzugt beinhaltet dieses Substrat Silizium.

Das Aufbringen von Partikel auf eine Testscheibe erfolgt bevorzugt mit Hilfe einer Suspension, in der die Partikel vorliegen. Die in der Suspension vorliegenden Partikel weisen bevorzugt einen sehr limitierten Größenbereich zwischen 15nm und 3000nm auf. Außerdem ist darauf zu achten, dass der Fremdstoffgehalt (nicht gewollte Verunreinigungen) minimal ist.

Das Aufbringen der Partikelsuspension kann analog der Herstellung von Kalibrierscheiben für Laserstreulichtsystemen erfolgen. Die Partikelsuspension kann dabei vollflächig oder bevorzugt in Teilflächen (Spots) ausgeführt werden. Die Verwendung eines Partikelzählers kann dabei hilfreich sein.

Als Basis für eine korrekte Klassifizierung von Partikeln bieten sich Standard-Partikel mit bekannter Größe und chemischer Zusammensetzung an. Am Markt sind standardisierte Partikel mit unterschiedlichsten chemischen Zusammensetzungen wie Aluminium, Kupfer oder auch Yttrium verfügbar.

Bevorzugt werden Partikel gleicher chemischer Zusammensetzung aber mit unterschiedlichen Größen verwendet, wobei die Größenverteilung der verwendeten Partikel ganz besonders bevorzugt zwischen 20 nm und 100 nm liegt.

Nach dem Aufbringen der Partikel auf eine Testscheibe werden für eine Anzahl von Partikel die Größe bestimmt und ein Spektrum einer energiedispersiven Röntgenspektroskopie aufgenommen. Beide Informationen werden gespeichert.

Zum Messen der energiedispersiven Röntgenspektroskopie kann beispielsweise ein Gerät der Firma Zeiss Typ SEM-EDX, Zeiss - Auriga 60, 70mm² - mit EDAX-Elite-Super-EDX-Detektor verwendet werden, mit den folgenden Einstellungen: 5 keV, Arbeitsabstand: 6.1 mm, Blende 30 µm, EDX-Integrationszeit: 10 s. Es kann jedoch auch jedes andere gleichwertige Gerät verwendet werden.

Bevorzugt wird zum Ermitteln der Größe des Partikels bekannter chemischer Zusammensetzung ein Elektronenmikroskop verwendet (Scanning Electron Microscope).

Als "Größe" wird dabei ein ermittelter Durchmesser des Partikels verstanden, gleichwertig kann auch eine Fläche des Partikels verstanden oder daraus direkt abgeleitete Größen verstanden werden.

Die gewonnenen Spektren werden bevorzugt so ausgewertet, dass sie den Stoffgehalt des gewünschten Stoffes ausgibt. Dies kann über die Auswertung des entsprechenden, für den chemischen Stoff charakteristischen Peak des Spektrums erfolgen.

Besonders bevorzugt werden SiO₂ Partikel verwendet, bei denen der Sauerstoffgehalt und die Größe ermittelt werden. Es können jedoch auch andere Partikel anderer bekannter chemischer Zusammensetzung zum selben Zweck verwendet werden.

Der Stoffgehalt wird bevorzugt als Funktion der Größe (zum Beispiel Durchmesser) aufgetragen und daraus eine Ausgleichskurve ermittelt, die einen mathematischen Zusammenhang zwischen Stoffgehalt und Größe in Form einer Ausgleichskurve ergibt.

Sowohl die Größe als auch die chemische Zusammensetzung von Partikel unbekannter chemischer Zusammensetzung auf der Oberfläche einer Halbleiterscheibe, die bevorzugt Silicium enthält, werden bestimmt.

Bevorzugt wird hierbei eine energiedispersiven Röntgenspektroskopie verwendet. Die Größe der unbekannten Partikel wird bevorzug mittels eines Elektronenmikroskops (SEM) bestimmt.

**Abbildung 1** zeigt beispielsweise den mit Hilfe der energiedispersiven Röntgenspektroskopie normierten Sauerstoffgehalt von SiO₂ Partikel als Funktion des Durchmessers (leere Kreise). Eine lineare Ausgleichskurve wurde so angepasst, dass eine Proportionalität zwischen Sauerstoffgehalt und Durchmesser deutlich wird. Ebenso kann ein Konfidenzbereich bestimmt werden, so dass 95% der Datenpunkte in diesem Bereich liegen.

Aus der Lage der Messpunkte von Partikel unbekannter chemischer Zusammensetzung gezeigt in **Abbildung 1** (gefüllte Kreise, leeres Dreieck) kann auf die chemische Zusammensetzung geschlossen werden, ohne Daten über deren Struktur zu haben.

Die Daten, die beispielsweise durch gefüllte Kreise wiedergegeben werden, zeigen, dass deren Sauerstoffgehalt offenbar weitgehend unabhängig von deren Größe ist.

Die Erfinder haben dabei erkannt, dass ein SiO₂ Partikel als Ursprung dieser Partikel mit hoher Wahrscheinlichkeit ausgeschlossen werden. Diese Partikel würden daher als "nicht SiO₂ Partikel" klassifiziert.

Für Datenpunkte, die in einen Konfidenzbereich für SiO₂-Partikel fallen, kann mit hoher Wahrscheinlichkeit angenommen werden, dass auch SiO₂ Partikel sind. Die Klassifizierung lautet daher "SiO₂ Partikel".

Für Datenpunkte, die offenbar weder in den Konfidenzbereich für SiO₂ fallen noch einen von der Größe unabhängigen Sauerstoffgehalt zeigen (z.B. leeres Dreieck in **Abbildung 1****),** kann entweder angenommen werden, dass es Partikel mit einem gewissen Sauerstoffgehalt sind, die nicht kugelförmig sind oder dass es Partikel mit einer eventuell intrinsischen Oxidschicht sind. Auch diese Information kann hilfreich sein, wenn es darum geht, den Ursprung für das Auftreten von Partikel zu ermitteln. Partikel dieser Art werden ebenso als "nicht SiO₂ Partikel" klassifiziert.

Die Erfinder haben erkannt, dass die beschriebene Vorgehensweise dann besonders vorteilhaft ist, wenn anzunehmen ist, dass die Halbleiterscheibe, auf denen sich die unbekannten Partikel befinden, mit einer gewissen Oxidschicht, beispielsweise einer nativen Oxidschicht, versehen ist. Diese Oxidschicht beeinflusst die energiedispersiven Röntgenspektroskopie. Durch die Zusatzinformation der Größe des Partikels und den Vergleich mit einer Ausgleichskurve von bekannten Partikeln zeigt dieser Messfehler nur geringe negative Wirkung.

Analog können auch Partikel mit anderer chemischer Zusammensetzung verfahren werden, um beispielsweise deren wahrscheinlichen Ursprung zu ermitteln.

## Patentansprüche

1. Verfahren zum Klassifizieren von unbekannten Partikeln auf einer Oberfläche einer Halbleiterscheibe umfassend:
das Aufbringen von Partikel bekannter chemischer Zusammensetzung unterschiedlicher Größe auf einer Testscheibe, Bestimmen einer Größe mehrerer Partikel bekannter chemischer Zusammensetzung und Aufnehmen eines Spektrums einer energiedispersiven Röntgenspektroskopie mehrerer Partikel bekannter chemischer Zusammensetzung, gefolgt vom jeweiligen Bestimmen eines Stoffgehaltes daraus, und Anpassen einer Ausgleichskurve an Größe und Stoffgehalt der Partikel bekannter chemischer Zusammensetzung, ferner das Bestimmen einer Partikelgröße eines unbekannten Partikels und ein Aufnehmen eines Spektrums einer energiedispersive Röntgenspektroskopie des unbekannten Partikels und daraus ermitteln des Stoffgehaltes des unbekannten Partikels auf einer Halbleiterscheibe und Klassifizieren des unbekannten Partikels als Ergebnis des Vergleiches der Größe und des Stoffgehaltes des unbekannten Partikels mit der Ausgleichskurve.

2. Verfahren nach Anspruch 1, **dadurch gekennzeichnet, dass** die Ausgleichskurve eine Gerade ist.

3. Verfahren nach einem der vorstehenden Ansprüche, gekennzeichnet, dass die Testscheibe Silicium enthält.

4. Verfahren nach einem der vorstehenden Ansprüche, gekennzeichnet, dass die Halbleiterscheibe Silicium enthält.

5. Verfahren nach einem der vorstehenden Ansprüche, **dadurch gekennzeichnet, dass** die Größe eines unbekannten Partikels mittels eines Elektronenmikroskops ermittelt wird.

6. Verfahren nach einem der vorstehenden Ansprüche, **dadurch gekennzeichnet, dass** die Größe eines bekannten Partikels mittels eines Elektronenmikroskops ermittelt wird.

7. Verfahren nach einem der vorstehenden Ansprüche, **dadurch gekennzeichnet, dass** die Partikel bekannter chemischer Zusammensetzung SiO₂ enthalten.

## Claims

1. Method for classifying unknown particles on a surface of a semiconductor wafer comprising:
depositing particles of known chemical composition of different sizes on a test wafer, determining a size of a plurality of particles of known chemical composition and taking a spectrum of energy dispersive X-ray spectroscopy of a plurality of particles of known chemical composition, followed by determining a material content thereof, respectively, and fitting a compensation curve to the size and material content of the particles of known chemical composition, further determining a particle size of an unknown particle and recording an energy dispersive X-ray spectroscopy spectrum of the unknown particle and determining therefrom the material content of the unknown particle on a semiconductor wafer and classifying the unknown particle as a result of comparing the size and material content of the unknown particle with the compensation curve.

2. Method according to claim 1, **characterized in that** the compensation curve is a straight line.

3. Method according to any of the preceding claims, **characterized in that** the test disc contains silicon.

4. Method according to any one of the preceding claims, **characterized in that** the semiconductor wafer comprises silicon.

5. Method according to any one of the preceding claims, **characterized in that** the size of an unknown particle is determined by means of an electron microscope.

6. Method according to any one of the preceding claims, **characterized in that** the size of a known particle is determined by means of an electron microscope.

7. Method according to any of the preceding claims, **characterized in that** the particles of known chemical composition contain SiO₂.

## Revendications

1. Procédé de classification de particules inconnues sur une surface d'une plaquette semi-conductrice comprenant :
le dépôt de particules de composition chimique connue de différentes tailles sur une plaquette de test, la détermination d'une taille d'une pluralité de particules de composition chimique connue et l'enregistrement d'un spectre de spectroscopie de rayons X à dispersion d'énergie d'une pluralité de particules de composition chimique connue, suivi par la détermination d'une teneur en substance respective à partir de celles-ci, et l'ajustement d'une courbe d'équilibre à la taille et à la teneur en substance des particules de composition chimique connue, en outre, la détermination d'une taille de particule d'une particule inconnue et l'enregistrement d'un spectre d'une spectroscopie de rayons X à dispersion d'énergie de la particule inconnue et, à partir de là, la détermination de la teneur en substance de la particule inconnue sur une plaquette semi-conductrice et la classification de la particule inconnue comme résultat de la comparaison de la taille et de la teneur en substance de la particule inconnue avec la courbe d'égalisation.

2. Procédé selon la revendication 1, **caractérisé en ce que** la courbe de compensation est une droite.

3. Procédé selon l'une quelconque des revendications précédentes, **caractérisé en ce que** le disque de test contient du silicium.

4. Procédé selon l'une quelconque des revendications précédentes, **caractérisé en ce que** la plaquette semi-conductrice contient du silicium.

5. Procédé selon l'une quelconque des revendications précédentes, **caractérisé en ce que** la taille d'une particule inconnue est déterminée au moyen d'un microscope électronique.

6. Procédé selon l'une quelconque des revendications précédentes, **caractérisé en ce que** la taille d'une particule connue est déterminée au moyen d'un microscope électronique.

7. Procédé selon l'une des revendications précédentes, **caractérisé en ce que** les particules de composition chimique connue contiennent du SiO₂.
